# EUROPEAN PATENT APPLICATION

(11) **EP 1 870 194 A1**
(43) Date of publication of application: **26.12.2007**
(21) Application number: 06012780.0
(22) Date of filing: 21.06.2006
(51) Int. Cl.: B23K 26/067, B23K 26/26, B23K 101/16, B23K 103/04

(54) **Method of producing a continuous metal strip by laser butt welding, with a laser having a multimodal welding power distribution**

(71) Applicant: Corus Technology BV, 1970 CA Ijmuiden (NL)
(72) Inventor: Longfield, Nicholas, Peter, 1943 JW Beverwijk (NL); Lieshout, Thomas, Tarcicius, 1625 CZ Hoorn (NL); De Wit, 1966 MA Heemskerk (NL)
(74) Representative: Kruit, Jan

(57) **Abstract**

This invention relates to a method of producing a continuous metal strip by butt-welding the trailing edge (5a) of a first metal strip (5) to the abutting leading edge (4a) of a second metal strip (4) using laser energy, characterised in that a laser is used to provide a multimodal welding power distribution, wherein the multimodal welding power distribution has at least a first power peak (A) and a second power peak (B) separated from the first power peak by a power trough (C), wherein the first power peak (A) converges on the trailing end of the first metal strip (5) and wherein the second power peak (B) converges on the leading end of the second metal strip (4).
The invention also relates to an apparatus for producing a continuous metal strip by said method and to a continuous coil-treating line comprising said apparatus.

## Description

This invention relates to a method of producing a continuous metal strip by butt-welding the trailing edge of a first metal strip to the abutting leading edge of a second metal strip using a laser-beam. The invention also relates to an apparatus for producing a continuous metal strip by said method and to a continuous coil-treating line comprising said apparatus.

Many processes in the metal industry, and in particular in the steel industry, originated as batch-type processes wherein a hot-rolled coil was treated as a coil during the subsequent processes of pickling, cold rolling, annealing and temper rolling.

Over the years, many of these processes have evolved into continuous processes wherein coils are joined together to form a continuous metal strip which is fed into the process. Continuous annealing, continuous cold rolling, continuous coating are examples of this evolution. Continuous pickling has been known for decades.

These continuous process require that metal strips, which are usually provided in the form of coils, are joined together to form a continuous metal strip. A metal strip is fed into the process and the trailing end of this strip is joined to the leading end of a subsequent strip. This process of joining strips or coils can be repeated endlessly thereby forming a continuous metal strip for continuous further processing. While joining, the location where the joint is made is usually kept stationary while the joint is being made, while an accumulator is usually provided to assure undisturbed travel of the material to be further processed downstream of the joining device.

Several methods have been proposed for joining the trailing end of a first metal strip to the leading end of the subsequent metal strip. Mechanical methods such as dovetailing or seaming are generally considered unreliable or time-consuming and as a result butt-joining by welding the coils together has become the most widely used.

The use of resistance seam welding and flash butt-welding has been proposed. However, these welding techniques have the problem of a local increase in thickness at the location of the joint as a result of the nature of the welding techniques. EP-0 659 518-B1 proposes butt-joining by welding the metal strips using a laser beam to avoid the local increase in thickness at the location of the joint.

The disadvantage of using a laser beam like in EP-0 659 518-B1 is that the preparation of the trailing end of the first metal strip and the leading end of the subsequent metal strip has to be done very carefully. The quality of the shearing has to be very good because the quality of a laser weld is very sensitive to misalignment of the two parts to be joined. If the alignment is not adequate, the weld may be of insufficient quality, and it may break during continuous further processing, leading to an entire line stop until the strip is re-threaded and pulled through as well as to rejected material. This has a severe impact on the productivity of such a line and it may moreover lead to damage to the line or components thereof.

Maintenance of the shearing device is critical, because inadequate shearing may lead to inadequate welds. Regular maintenance of the shearing device adds to the maintenance costs of the line both in terms of money spent and standstill time.

It is an object of the invention to provide a method for butt-joining and welding metal strips together to produce a continuous metal strip using a laser beam, which produces a weld of consistently good quality which is less dependent on the quality of the alignment of the metal strip ends to be joined.

It is also an object of the invention to provide a method for butt-joining and welding metal strips together to produce a continuous metal strip using a laser beam, which provides a better first-time-right performance.

It is also an object of the invention to provide a method for butt-joining and welding metal strips together to produce a continuous metal strip using a laser beam, which is less sensitive to a poor strip entry shape.

It is also an object of the invention to provide a method for butt-joining and welding metal strip together to produce a continuous metal strip using a laser beam, which enables a reduction of maintenance costs and standstill costs due to maintenance or repair of the shearing means providing the cut metal strip ends to be welded together.

At least one of these objects is reached by providing a method of producing a continuous metal strip by butt-welding the trailing edge of a first metal strip to the abutting leading edge of a second metal strip using laser energy, characterised in that a laser is used to provide a multimodal welding power distribution, wherein the multimodal welding power distribution has at least a first power peak and a second power peak separated from the first power peak by a power trough, wherein the first power peak converges on the trailing end of the first metal strip and wherein the second power peak converges on the leading end of the second metal strip.

The laser energy may be provided by one or more a single beam laser sources, or a multiple beam laser source. The multimodal welding power distribution may be provided by splitting the single or multiple laser beam using suitable optics. A single laser beam may for instance be split into two or more laser beams using splitter and mirrors. In the context of this invention the leading edge and the trailing edge are defined as the abutting edges. The weld between the first metal strip and the second metal strip is intended to join the abutting edges together to provide a continuous metal strip. With the method according to the invention a wider weld is provided due to the presence of a plurality of power peaks. The convergence or focussing of at least a first power peak on the trailing edge of the first metal strip and at least a second power peak on the leading edge of the second metal strip provides a power input over a wider distance than a single spot weld. Moreover, when using a single spot weld, i.e. a welding power distribution comprising only one focussed laser beam, the power is concentrated on the location where the trailing edge abuts the leading edge. If the two abutting edges do not fit together perfectly, there may be a gap between the two abutting edges, leading to poor weld quality, particularly in case the alignment of both parts to be joined is unsatisfactory. When using the multimodal weld power distribution, the power is introduced in the abutting edges to be joined immediately next to the location where the edges abut or the gap if the edges do not abut perfectly, thereby achieving a more consistent power transfer, resulting in a better weld. The weld quality is not affected by the presence of a gap. Poor abutment or alignment may also be the result of different or poor strip entry shape, such as waviness, of the two metal strip ends to be joined. It should be noted that the location of the power trough can be chosen by a suitable adjustment of the optical arrangement for focussing and/or splitting a laser beam or by providing one or more additional beams. This way, the depth of the trough can be adjusted between very deep (i.e. substantially no welding power in the trough) and almost absent (i.e. the welding power in the trough is at most the welding power of the first or second peak). The movement of the laser-beam along the abutting edges is to be understood in such a way that the laser beam moves substantially along or parallel to the abutting edges so as to appropriately provide the welding power to the metal strip edges to be welded together to produce a continuous metal strip. This movement is a relative movement of the metal strips with regard to the laser beam. Moving the metal strip edges to be welded together along a stationary laser beam is therefore also embodied in this invention, as well as the simultaneous movement of the metal strip ends to be welded together along a moving laser beam.

If the metal strip ends to be welded together are not cleanly sheared due to wear of the shearing device leading to poor abutment or misalignment (horizontal and/or vertical), the multimodal weld power distribution ensures that a proper weld of good quality can be made, despite the misalignment. This relative insensitivity for misalignment can be translated in a reduced need for maintenance or repair of the shearing device, leading to a longer life span of a set of knives, and thereby in lower maintenance costs and standstill costs. Typically, after prolonged use, the quality of the shearing diminished due to wear of the shearing device and the knives. As a result, the edges of the metal strips where the joint is to be made, start to show vertical and/or horizontal misalignments resulting in a significant decrease in weld quality, resulting in a low first time right efficiency when using a single spot laser welder. Since an apparatus providing a multimodal welding power distribution can deal much more easily with horizontal and vertical misalignments, the life span of the shear cassette can be increased.

The method according to the invention provides a multi spot welding process that is more stable than the single spot process in terms of plasma plume fluctuations and the generation of spatter. The weld pools of the two foci join up and form a single melt pool, i.e. keyhole. The two foci thus effectively increase the spot size of the laser beam in comparison to a single beam. However, the same effect cannot be reached by defocusing the single laser beam, because in that case keyhole welding will not be achieved, but a shallow weld pool will be achieved instead. The multi spot welding may comprise two spots focusing on either side of the abutting edges and an additional spot on the location where the two edges abut, or a plurality of spots focusing on one or either side of the abutting edges and optionally an additional spot on the location where the two edges abut.

In an embodiment of the invention the multimodal welding power distribution is a bimodal welding power distribution.

This embodiment is the simplest embodiment in terms of number of spots with which one or more of the objects of the invention can be reached and is therefore a preferable embodiment for instance because of maintainability, limited complexity of the optical system and ease of operation.

The magnitude of generated defects due to the vertical and/or horizontal misalignments were found to be minimised by the twin spot process as more of the base metal was melted to form the joint. Larger horizontal and/or vertical misalignments can be tolerated and still obtain improved weld quality. The bimodal welding power distribution is the simplest form of welding power distribution with which the advantages according to the invention can be reached.

In some cases, it is beneficial to use a welding power distribution comprising a less severe thermal gradient away from the joint, for instance when welding material which is sensitive to cracking as a result of the high temperature gradient. By using a less steep welding power distribution towards the joint, for instance by introducing an additional peak on one or both sides of the joint, the temperature increase towards the joint can be made more gradual. However, care has to be taken to retain proper keyhole welding characteristics. In keyhole laser welding the laser beam produces a keyhole in the material by the presence of fast evaporating metal vapour or plasma. The keyhole moves with the focussed laser beam along the seam. The molten material flows around the keyhole from the front wall backwards and closes the gap. The presence of at least two foci in the bimodal welding power distribution, or more than two in the multimodal welding power distribution, results in more molten material between the foci.

In an embodiment of the invention the first metal strip and the second metal strip are provided in a coiled form.

In an embodiment of the invention, the welding power distribution is asymmetrical. In this embodiment the height and/or width of the first peak is different from that of the second peak, i.e. the welding power is different on both sides of the abutting edges to be welded together. This embodiment is particularly relevant for welding metal strips having different properties e.g. as a result of chemical composition, or for welding metal strips having a thickness difference.

In an embodiment of the invention the spatial separation between the focus of the first peak and the focus of the second peak is at least 0.3 mm, preferably at least 0.5 mm, more preferably at least 0.6 mm.

It was found that when using a spatial separation of at least 0.3 mm, such as 0.4 mm, enables using the same weld parameters as for single spot welding to achieve full penetration for all thicknesses of cold rolled material, but resulted in a dramatic increase of the weld quality and reduction in number of weld breaks. However, even further increases in first-time-right performance can be achieved by increasing the spatial separation to at least 0.5 mm or at least 0.6 mm. A spatial separation of 0.7 mm or more provided excellent results in the welding of blackplate, such as prior to pickling. This increased spatial distribution may require identification of the correct welding parameters, but this lies well within the skills of the person skilled in the art of laserwelding. Using a spatial separation of 1 mm or more also provided good results, even though this is at the expense of an increased welding time. The optimum spatial separation is believed to be between 0.3 and 1.0, and preferably between 0.5 and 0.85 mm. It should be noted that the spatial separation in the context of this invention is the minimum distance between the focus of the peak closest to the abutting edges on one side of the abutting edges and the focus of the peak closest to the abutting edges on the other side of the abutting edges. In case of a bimodal welding power distribution the spatial separation is the distance between the foci of the two peaks. When the distance between the foci becomes too large, the material between the two foci does not melt completely, thus deteriorating the quality of the weld. In an embodiment of the invention, the spatial separation is chosen so as to achieve melting of the material, i.e. a keyhole, at least between the focus of the peak closest to the abutting edges on one side of the abutting edges and the focus of the peak closest to the abutting edges on the other side of the abutting edges. By adapting the optics of the laser beam, this spatial separation can be varied, and the proper spatial separation can be easily found by varying the spatial separation.

The benefits in terms of tolerance to fit-up (i.e. alignment) and sheared quality are a function of the twin spot separation, whereby, a higher spot separation gives a lower aspect ratio weld with more ability to 'soak up' undercut and stress concentration defects.

In an embodiment of the invention the metal strip to be welded together is made of a steel, unalloyed steels or low-alloy steels, or aluminium. Although the method according to the invention can be advantageously used for joining metal strips of any weldable metal which are produced in continuous processes such as copper, brass, zinc, nickel and alloyed steels such as stainless steels, the method according to the invention is particularly suitable for welding steel strips such as unalloyed steels or low-alloy steels together to form a continuous metal strip for processing in a continuous processing line such as a continuous pickling line, continuous rolling line, continuous annealing line, continuous coating line, continuous painting line and the like. Particularly for aluminium the method according to the invention provides an alternative for the mechanical joining process. The high heat input of the laser welding in combination with the multimodal or bimodal welding power distribution over the abutting edges makes the method very suitable for welding aluminium strips or coils together to form a continuous aluminium strip for further continuous processing.

According to a second aspect of the invention an apparatus for producing a continuous metal strip by butt-welding the trailing edge of a first metal strip to the abutting leading edge of a second metal strip using a laser is provided, wherein the apparatus comprises means for providing laser energy with a multimodal welding power distribution, the multimodal welding power distribution having at least a first power peak and a second power peak separated from the first power peak by a power trough, and means for focusing the first power peak on the trailing end of the first metal strip and for focusing the second power peak on the leading end of the second metal strip.

With the apparatus according to the invention a wider weld is provided due to the presence of a plurality of power peaks. The convergence of at least a first power peak on the trailing edge of the first metal strip and at least a second power peak on the leading edge of the second metal strip provides a power input over a wider distance than a single spot weld. Moreover, when using a single spot weld the power is concentrated in the gap, leading to poor weld quality, particularly in case the alignment of both parts to be joined is unsatisfactory. When using the multimodal weld power distribution, the power is introduced in the parts to be joined immediately next to the gap, thereby achieving a more consistent power transfer, resulting in a better weld. Other advantages of the multimodal welding power distribution have been explained above. Preferably, the apparatus comprises means to provide the laser energy with a bimodal welding power distribution, such as twin spot optics.

In an embodiment of the invention, the apparatus is adapted to provide a welding power distribution which is asymmetrical. In this embodiment the height and/or width of the first peak is different from that of the second peak, i.e. the welding power is different on both sides of the abutting edges. This embodiment is particularly interesting for welding metal strips having different properties e.g. as a result of chemical composition, or for welding metal strips having a thickness difference.

In an embodiment of the invention the apparatus is adapted to provide a spatial separation between the focus of the first peak and the focus of the second peak is at least 0.3 mm, preferably at least 0.5 mm, more preferably at least 0.6 mm.

The optimum spatial separation is believed to be between 0.3 and 1.0, and preferably between 0.5 and 0.85 mm.

In a preferred embodiment of the invention the apparatus comprises a constant wave laser system for providing at least part of the laser energy. The simplicity of a constant wave laser system and the reliability thereof ensures a trouble free use of such a device in the rough works environment. However, the apparatus according to the invention can also be provided with a pulsed laser for providing at least part of the laser energy if such a system happens to be already present in a line, or if for some other reason a pulsed laser is preferable. However, for a new line, a constant wave laser system would be preferable for the device and process according to the invention. It is noted that a constant wave laser system may emulate a pulsed laser system by using appropriate optics which allows the laser beam to wag between the focus on the trailing end to the focus on the leading end thereby achieving the multimodal power distribution according to the invention using a wagging laser beam. In between the foci the laser beam may be interrupted, thus creating a trough, or not, thus creating a constant intensity between the first peak and the second peak, or an intensity in between. This wagging system and the method of using a wagging laser beam can be used with any laser system, pulsed or constant wave.

In an embodiment of the invention the laser beam is provided by a CO₂ laser, a Nd:YAG laser or a fibre laser. A Nd:YAG laser provides a laser beam with a much shorter wavelength than CO₂ lasers. The apparatus according to the invention can be operated using any of these types of lasers. If so desired, the apparatus according to the invention may also be operated in a hybrid mode, for instance in conjunction with an arc welding process, i.e. Laser-arc hybrid welding. Also, means may be provided to avoid formation of undesirable microstructures in the weld and/or the heat-affected zone. These means may comprise a trailing laser beam to slow down the cooling rate of the weld and/or the heat-affected zone, for instance to avoid formation of hardening structures such as martensite in steel.

In an embodiment of the invention an apparatus is provided wherein the first and the second metal strip are provided as coils of metal strip, the apparatus also comprising:
- means for uncoiling and for recoiling the coils;
- shearing means for providing the trailing edge of the first metal strip by shearing the trailing end of the first coil and for providing the leading edge of the second metal strip by shearing the leading end of the second coil,
- optionally means for positioning and/or abutting the trailing edge of the first metal strip and of the leading edge of the second metal strip to be welded together,
- means for providing a welding power distribution according to the invention.

This embodiment is the advantageous application of the apparatus according to the invention in an apparatus for processing metal strip in the form of coiled metal strip. The optional means for positioning and abutting the trailing edge of the first metal strip and of the leading edge of the second metal strip allow for an improvement in weld quality and welding speed because the metal strip ends are accurately positionable and holdable so as to achieve a very good alignment of the two pieces of metal to be welded together. Consequently, in a preferable embodiment these means for positioning and abutting are present in the apparatus according to the invention.

According to a second aspect of the invention, a continuous coil-treating line is provided for processing the continuous metal strip such as a continuous pickling line, a continuous rolling line, a continuous annealing line or a coating line for continuous coating of coils with metallic and/or non-metallic coating comprising a device according to the invention for joining the coils to be continuously treated. It is of course also possible to combine one or more of these continuous lines, such as a continuous rolling mill followed by a continuous cleaning section and continuous annealing and galvanizing. In that case, only one device according to the invention is needed to join the coils to form a continuous metal strip. The recoiling device of the device according to the invention would then be located after the galvanising section. The benefits of such a combination of lines are well known. However, the more lines are combined, the greater the need for a very reliable weld. The benefits of the apparatus according to the invention have already been highlighted hereinabove. Usually in such a coupled system, an accumulator is provided between the welder and the first continuous process step, and another accumulator is provided after the last processing step and the recoiling device. In an embodiment of the invention the metal strip to be welded together is made of a steel, unalloyed steels or low-alloy steels, or aluminium.

According to a third aspect of the invention, a process of continuous coil treating such as continuous pickling, continuous rolling, continuous annealing or a continuous coating comprising the step of welding a trailing end of a first coil to the leading end of a subsequent coil using an apparatus according to the invention. It is of course also possible to combine one or more of these continuous lines, such as a continuous rolling mill followed by a continuous cleaning section and continuous annealing and galvanizing to provide a coupled process. In that case, only one device according to the invention is needed for joining the coils to form a continuous metal strip. The recoiling device of the device according to the invention would then be located after the galvanising section. The advantages of this method have been extensively explained above.

The invention will now be further described by means of the following, non limitative examples under reference to the following, non-limitative figures.

Figure 1 shows the effect of horizontal misalignment (HMA) and vertical misalignment (VMA) on the tensile strength of 2.5 mm thick CMn steel.

Figure 2 shows the beam weld power density profiles of single spot (left) and a bimodal welding power distribution (twin spot) with a spatial separation of 0.7 mm.

Figure 3 shows the effect of the spatial separation of a bimodal welding power distribution on the welding speed (v in m/min) of 1.1 mm, 1.5 mm, 2.0 mm and 2.5 mm thick CMn-steel black plate.

Figure 4 shows the transverse sections of a single spot laser weld with a 0.2 mm horizontal misalignment (i.e. gap) (4a) and a 0.7 mm twin spot laser weld with a 0.4 mm horizontal misalignment (4b).

Figure 5 shows a schematic representation of the apparatus according to the invention in a pickling line for pickling hot rolled steel strip prior to cold rolling.

Figure 6 shows a schematic representation of a symmetrical bimodal welding power distribution (Figure 6a) and an example of a multimodal welding power distribution (Figure 6b).

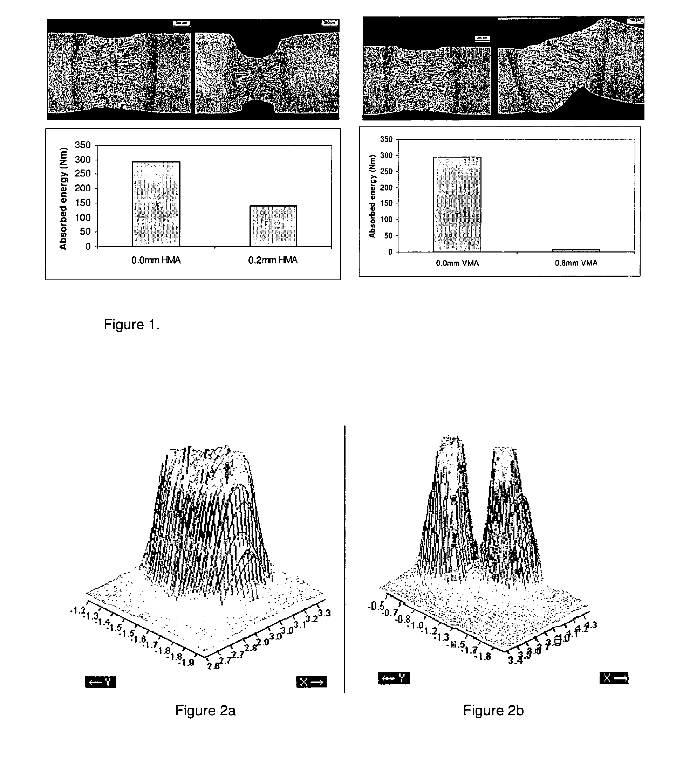

The effect of vertical and horizontal strip misalignment was characterised at the Corus RD&T laboratory in IJmuiden using a 6 kW CO₂ laser and flying optics gantry using single spot optics with a focal length of 200 mm. It was found that the vertical and horizontal misalignments had a fundamental effect on the mechanical property of the resulting welds, whereby misalignments created undercut and stress concentrators, reducing the tensile energy before failure occurred. As can be seen from Figure 1, a horizontal misalignment ([HMA], a gap between the strip) produces a weld that is characterised by undercut on the top and bottom surfaces of the weld. This undercut is detrimental to the tensile strength, whereby the energy required to fracture the weld is halved when compared to a weld produced in the same material with zero gap. Vertical misalignment (VMA) was found to be substantially more detrimental to the strength required to fracture the weld. Indeed, the introduction of a vertical misalignment of only 0.8 mm in 2.5 mm thick CMn-steel strip reduced the load carrying ability by 97%. The more severe effect of vertical misalignment on the tensile strength is realised on account of the stress concentrations at the weld toe that is enhanced by the rollover effect resulting from the sheared edge.

Twin spot optics (Kugler Precision GmbH) were mounted on the 6 kW CO₂ laser. The single spot and 0.7mm twin spot power intensity profiles are reproduced in Figure 2a and 2b. Single spot and twin spot laser welds were produced at 6kW laser power to assess the weld quality produced from each optic under a variety of vertical and horizontal misalignments and strip thickness. Vertical misalignment was introduced by placing aluminium shims under one of the plates to be welded and horizontal misalignment was introduced by trapping aluminium shims in-between the strips to be welded.

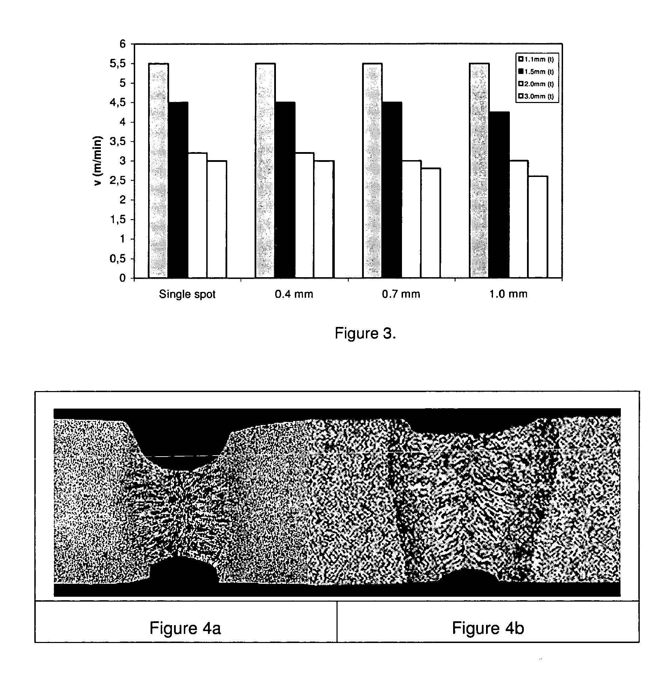

The single and twin spot laser welding processes was then completely characterised for twin spot optics with 0.4, 0.7 and 1.0 mm spot separation on 1.0, 1.5, 2.0 and 2.5 mm (from left to right in each group of 4 in figure 3, the thin gauge allowing the highest welding speed (v) in m/min) hot rolled black-plate steel so as to simulate the condition of the material prior to pickling. It was found that it was necessary to reduce the welding speed slightly when increasing the spot separation to maintain full penetration. The relationship between spot separation and welding speed is detailed further in Figure 3. The reduction in welding speed can be easily overcome because of the presence of the accumulator. A 5 second increase in welding time is negligible in comparison to the time needed for a re-weld, and definitely negligible in comparison to a weld failure in the following continuous process. Interruptions of the continuous process can easily amount to several hours if the weld fails, for instance in the pickling or annealing process. Moreover, the material which is already in the process has to be rejected and scrapped.

In view of the benefits of greater tolerance to vertical and horizontal misalignments, and the corresponding increased first-time-right percentage lead to installation of the twin spot process in a pickle line. Initially, a small spatial separation of 0.4mm was installed. Using this spot separation required no changes in the standard (single spot) weld parameters (welding speed, laser power and focus height) to achieve full penetration for all strip thickness tested. During a period of 4 weeks the coil joiner ran in full production without strip breaks.

In order to further improve the first-time-right welding efficiency over the single spot process it was decided to replace the twin spot mirror with a higher spot separation of 0.7mm. The higher spot separation mirror required modifications to the welding parameters on account of the power density of the focus region being effectively reduced beyond the welding envelope required for full penetration at the original programmed power and speed. Once the correct parameters were identified, the first time right welding efficiency increased to over 95%, at the expense of, on average, a 5 second increase in welding time. This increase in welding time is negligible in comparison to several minutes to complete a single re-weld and can be easily accommodated by the accumulator.

Transverse sections of single and twin spot welds taken from the pickling line are shown in Figure 4. As can be clearly seen, the weld produced with twin spot with a 0.4 mm horizontal misalignment (figure 4b) illustrates substantially less undercut than the single spot weld with a 0.2 mm horizontal misalignment (Figure 4a), even with twice the root gap of 0.4 mm.

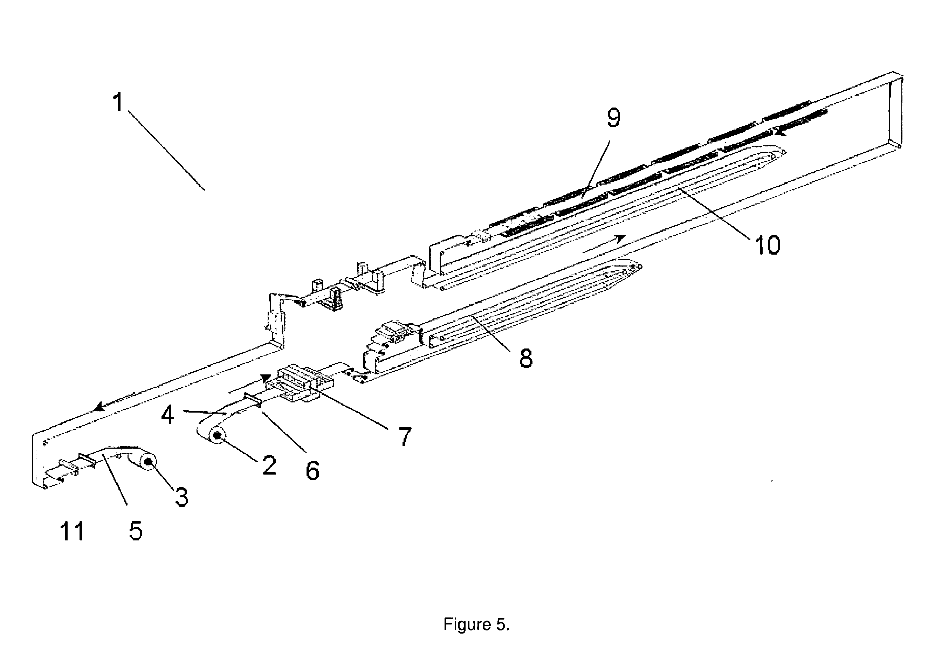

Figure 5 shows the application of the apparatus according to the invention in a continuous pickling line 1 which is used to continuously remove the oxide layer of hot rolled steel strip from the surface of the hot rolled strip prior to cold rolling. The schematic representation shows uncoiling means 2 for uncoiling coils of metal strip and coiling means 3 for coiling coils of metal strip. Shearing means 6 are shown for shearing the trailing end of the first coil 5 and the leading end of the second coil 4. The apparatus 7 for welding the coils of metal strip to produce a continuous metal strip is shown to be located between the shearing means 6 and the first accumulator 8. The arrows indicate the general direction of movement of the continuous strip through the continuous pickling line 1. A second 10 is shown located between the pickling baths 9 and coiling means 3. Shearing means 11 are indicated before the coiling means to cut the strip to the desired length prior to coiling.

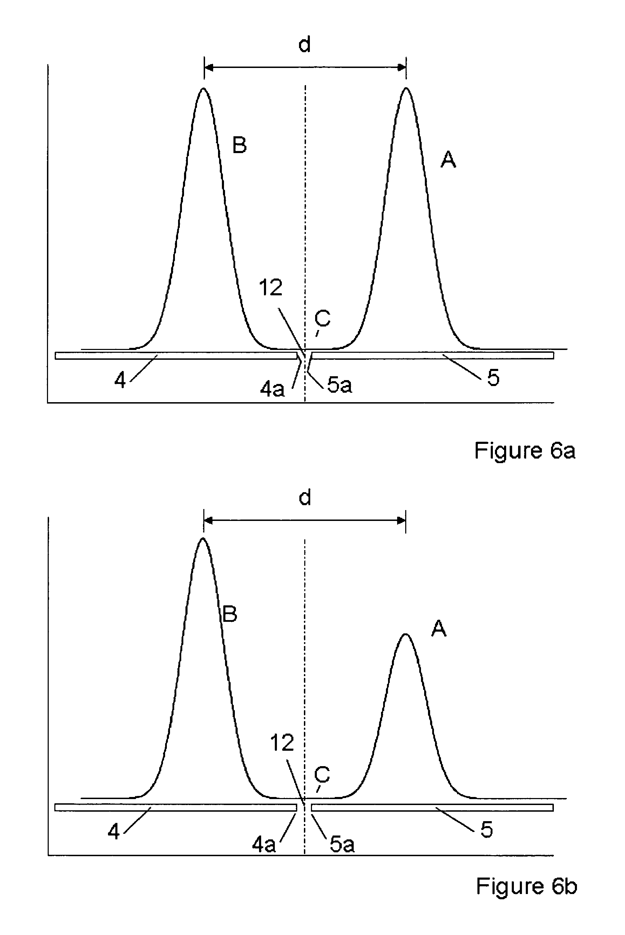

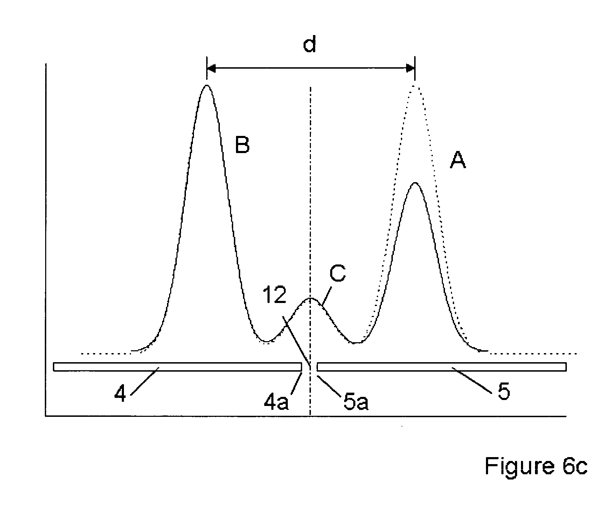

Figure 6 shows a schematic representation of a symmetrical bimodal welding power distribution (Figure 6a) and an example of a asymmetrical bimodal welding power distribution (Figure 6b) with a first power peak (A) and a second power peak (B). The welding power is schematically plotted on the vertical axis. The spatial separation between the first power peak and a second power peak is indicated with d. The location of the trough is indicated with C. The dashed line indicates the axis along which a beam from a single spot laser would target the plane where the edges (4a, 5a) abut. The length of the first and the second metal strip is obviously not to scale, but these extends beyond the boundaries of the figure. Only the end parts of the first and the second metal strip are shown in Figure 6a-c. The abutting edges, i.e. the location where the two metal strip or coil ends 4a and 5a are to be connected to each other by welding, is indicated with 12. In the figures the welding power per spot is schematically indicated as a Gaussian type curve. Symmetrical bimodal welding power distributions are preferable in welding materials of similar welding behaviour, such as similar materials with similar thickness. The asymmetrical bimodal welding power distribution can be used in welding materials which have dissimilar welding behaviour, such as similar materials of different thickness, or different materials of similar or dissimilar thickness. An asymmetrical bimodal welding power distribution can generally be achieved by reducing the welding power to one of the laser beams, for instance with a diaphragm. Figure 6c shows an asymmetrical multimodal welding power distribution with a first peak (A) separated from a second peak (B) with a separation d, and a third peak (C) focussing on the abutting edges. The dashed curve shows a symmetrical multimodal welding power distribution.

The other major benefit accrued to the installation of twin spot at the pickling line is the life of the shear cassette. Typically, at 10,000 shear cuts, the weld quality would diminish, resulting in a low first time right efficiency. The application of twin spot produced good welds even after 20000 shear cuts, resulting in at least a double life span of the shear cassette. The reduction in number of rewelds provides a further reduction in wear of the shear.

## Claims

1. Method of producing a continuous metal strip by butt-welding the trailing edge (5a) of a first metal strip (5) to the abutting leading edge (4a) of a second metal strip (4) using laser energy, **characterised in that** a laser is used to provide a multimodal welding power distribution, wherein the multimodal welding power distribution has at least a first power peak (A) and a second power peak (B) separated from the first power peak by a power trough (C), wherein the first power peak converges on the trailing end of the first metal strip (5) and wherein the second power peak converges on the leading end of the second metal strip (4).

2. Method according to claim 1 wherein the multimodal welding power distribution is a bimodal welding power distribution.

3. Method according to claim 1 or 2 wherein the first metal strip and the second metal strip are provided in a coiled form.

4. Apparatus for producing a continuous metal strip by butt-welding the trailing edge (5a) of a first metal strip (5) to the abutting leading edge (4a) of a second metal strip (4) using a laser, **characterized in that** the apparatus comprises means for providing laser energy with a multimodal welding power distribution, the multimodal welding power distribution having at least a first power peak (A) and a second power peak (B) separated from the first power peak by a power trough (C), and means for focusing the first power peak on the trailing end of the first metal strip and for focusing the second power peak on the leading end of the second metal strip.

5. Apparatus according to claim 4 wherein the apparatus comprises means for providing laser energy with a bimodal welding power distribution.

6. Apparatus according to claim 4 or 5 wherein the spatial separation (d) between the focus of the first peak and the focus of the second peak is at least 0.3 mm, preferably at least 0.5 mm, more preferably at least 0.6 mm.

7. Apparatus according to any one of claim 4 to 6 wherein the apparatus comprises a constant wave laser system for providing at least part of the laser energy.

8. Apparatus according to any one of claim 4 to 6 wherein the apparatus comprises a pulsed laser system for providing at least part of the laser energy..

9. Apparatus according to any one of claim 4 to 8 wherein the metal strip is a steel strip.

10. Apparatus according to any one of claims 4 to 9 wherein the first and the second metal strip can be provided as coils of metal strip, the apparatus also comprising:
- means for uncoiling (2) and for recoiling (3) the coils (4, 5);
- shearing means (6) for providing the trailing edge (5a) of the first metal strip by shearing the trailing end of the first coil (5) and for providing the leading (4a) edge of the second metal strip by shearing the leading end of the second coil (4);
- optionally means (10) for abutting the trailing edge (5a) of the first metal strip (5) and the leading edge (4a) of the second metal strip (4) prior and during welding.

11. Continuous coil-treating line such as a continuous pickling line, a continuous rolling line, a continuous annealing line or a coating line for continuous coating of coils with metallic and/or non-metallic coating comprising an apparatus according to any one of claim 4 to 10 for joining the coils to be continuously treated.

12. Use of an apparatus according to any one of claim 4 to 10 in a process of continuous coil treating such as continuous pickling, continuous rolling, continuous annealing or a continuous coating comprising the step of welding a trailing edge (5a) of a first coil (5) to the leading edge (4a) of a second coil (4).
